# EUROPÄISCHE PATENTANMELDUNG

(11) **EP 0 553 438 A1**
(43) Veröffentlichungstag der Anmeldung: **04.08.1993**
(21) Anmeldenummer: 92120617.3
(22) Anmeldetag: 03.12.1992
(51) Int. Cl.: B01D 29/11, B01D 29/60, B01D 29/84, B01D 29/94, B01D 35/16

(54) **Verfahren zum Filtrieren einer Flüssigkeit**

(30) Priorität: 15.01.1992 DE 4200881
(71) Anmelder: FILTERWERK MANN & HUMMEL GMBH, D-71631 Ludwigsburg (DE)
(72) Erfinder: Bartelt, Bertram, W-7141 Steinheim (DE); Koebbert, Klaus, W-5164 Nörvenich (DE); Schaal, Wolfgang, W-7150 Backnang (DE)
(74) Vertreter: Voth, Gerhard, Dipl.-Ing.

(57) **Zusammenfassung**

Beschrieben wird ein Verfahren sowie Vorrichtungen zur Durchführung desselben, zum Filtrieren einer Flüssigkeit, bei dem während des Filtriervorgangs in Zeitabständen das Filter abgereinigt und der anfallende Schlamm rückgespült wird.

## Beschreibung

Die Erfindung betrifft ein Verfahren zum Filtrieren einer Flüssigkeit. Derartige Verfahren sind bekannt, z.B. bei der Entwässerung von Schlämmen.

Nachteilig an bisher bekannten Verfahren ist, daß für die Zeit der Schlammabscheidung der Filtrationsvorgang zum Stillstand kommt. Man könnte nun ein mehrstufiges Verfahren entwickeln, bei dem eine Vorabscheidung über Absetzbecken einen Continue-Betrieb gewährleisten würde. Dies würde das Verfahren unnötig verteuern. Es wäre aber auch in der Anwendung sehr begrenzt einsetzbar, da das erforderliche Volumen für das Absetzbecken das Verfahren sehr umständlich macht.

Es ist somit Aufgabe der Erfindung, ein Verfahren der eingangs genannten Art dahingehend zu verbessern, daß ein einfaches, billiges und universell einsetzbares Verfahren geschaffen wird.

Erfindungsgemäß wird die Aufgabe dadurch gelöst, daß beim Filtrieren einer Flüssigkeit das Filter in Zeitabständen abgereinigt wird und ein Verschlußorgan an einer eigens dafür vorgesehenen Kammer zur Schlammabscheidung geöffnet und geschlossen wird, ohne den Filtriervorgang unterbrechen zu müssen. Mit Hilfe einer Regelung wird während des Filtrierens in der extra abzuriegelnden Kammer zur Schlammabscheidung der Schlamm entwässert. Der Vorteil liegt in der wesentlichen Reduzierung der Restfeuchte. So entstehen höherwertige Trockenschlämme, die in der Ablagerung im Betrieb und bei einem eventuellen Weitertransport sowie in einer weiteren Schlammverwertung wesentlich einfacher gehandhabt werden können, als z.B. stark flüssigkeitshaltige fließfähige Naßschlämme.

Des weiteren ergibt sich für alle eventuellen Folgeprozesse eine starke Volumenreduzierung. Es sinken die Kosten für Transport, Schlammbeseitigung sowie die Verluste an Bearbeitungsflüssigkeiten. Man erzielt vorteilhafterweise eine Verringerung bei der Beaufschlagung von Deponievolumen.

Gemäß der in der Bundesrepublik Deutschland maßgebenden Technischen Anleitung Abfall erhält die Abfallverwertung Vorrang vor der herkömmlichen Abfallbeseitigung. Diese Vorschrift gilt auch ausdrücklich für Sonderabfälle. Voraussetzungen für den Verwertungsvorrang sind, daß die Verwertung technisch möglich ist, die Kosten der Verwertung zumutbar sind und für die gewonnenen Stoffe oder Energie ein Markt besteht oder geschaffen werden kann. Erst wenn diese Kriterien nicht erfüllt sind, sind die Abfälle ordnungsgemäß zu beseitigen. Vorteilhafte Weiterbildungen der Erfindung ergeben sich aus den Unteransprüchen.

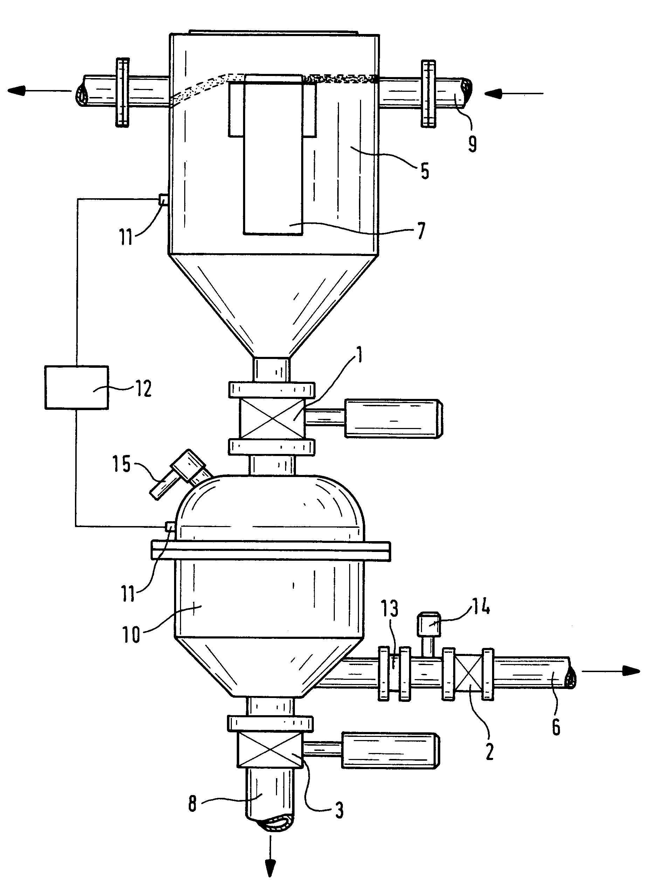

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in der Zeichnung dargestellt und werden im folgenden näher erläutert.

Die Anlage zum Filtrieren einer Flüssigkeit besteht aus einem Filterraum 5 und einer Kammer zur Schlammabscheidung 10, die durch einen Kugelhahn 1 getrennt sind. Filterraum 5 beinhaltet ein Filter 7, das regelmäßig abgereinigt wird. Ist eine Grenzbeladung des Filterraums mit Schlamm erreicht, lösen die Sensoren 11 in Verbindung mit der Regeleinrichtung 12 über ein Signal Kugelhahn 1 aus, der die Verbindung zur Kammer 10 freigibt, in die der feuchte Schlamm abgeschieden wird. Kammer 10 ist über Kugelhahn 1 mit dem Filterraum verbunden. Die Kammer 10 verfügt über ein Freispülorgan 15 sowie einen Kugelhahn 3 samt Schlammaustragsleitung 8 und eine Rückspülleitung 6, die ihrerseits mit der Regeleinrichtung 12 verbunden sind. In dieser Rückspülleitung 6 ist ein steuerbarer Kugelhahn 2 angebracht sowie ein Sieb 13 zur Rückhaltung des Schlammes und ein Rückspülorgan 14.

Hat sich Kugelhahn 1 geöffnet, und ist die feuchte Schlammfracht in die Kammer 10 gelangt, so schließt Kugelhahn 1 wieder. Nachdem sich Kugelhahn 1 geschlossen hat, wird Kugelhahn 2 geöffnet und die Freispülung geschieht über das Freispülorgan 15. Die Freispülung erfolgt mittels Luft, die zu diesem Zweck eingebracht wird. Der Schlamm wird von einem Filter bzw. Siebelement 13 zurückgehalten, die Retentatflüssigkeit fließt nach Passieren des Siebelementes 13 durch die Rückspülleitung 6 in den Vorratsbehälter.

Nach Beendigung der Freispülung wird der Kugelhahn 2 geschlossen. Durch öffnen des Kugelhahns 3 kann mit Hilfe von Luft der trockene Schlamm mittels des Rückspülorgans 14, das aus Sicht der Rückspülrichtung vor dem Sieb 13 angebracht ist, rückgespült werden und so durch die Schlammaustragsleitung 8 zur Weiterverwertung gelangen. Am Ende des Rückspülvorgangs wird der Kugelhahn 3 wieder geschlossen.

In einer anderen Ausführungsform ist Kugelhahn 1 solange geöffnet, bis aus der Kammer 10 zur Schlammabscheidung über einen Sensor 11 ein Signal an Kugelhahn 1 kommt, das diesen veranlaßt, aufgrund des Erreichens der Grenzbeladung der Kammer 10 mit Schlamm, die Verbindung zwischen Filterraum 5 und Kammer 10 bis zur Beendigung des Schlammabscheidevorgangs zu schließen. Nachdem sich Kugelhahn 1 geschlossen hat, spielt sich der im vorigen Ausführungsbeispiel geschilderte Vorgang des Schlammabscheidens ab, unter Beibehaltung der vollen Filtrationsfähigkeit.

In einem weiteren Ausführungsbeispiel ist eine Kammer zur Schlammabscheidung 10 mit den Kugelhähnen 1, 2, 3 ausgestattet. Dieses Beispiel soll vor Augen führen, daß eine solche Schlammabscheidungsvorrichtung in beliebigen Anlagekreisläufen installiert sein kann. Ist eine Grenzbeladung der Flüssigkeit mit Schlamm erreicht, löst ein Sensor 11 in Verbindung mit Regeleinrichtung 12 über ein Signal Kugelhahn 1 aus. Die Kammer zur Schlammabscheidung 10 verfügt über ein Freispülorgan 15 sowie einen Kugelhahn 3 samt Schlammaustragsleitung 8 und eine Rückspülleitung 6, die ihrerseits mit der Regeleinrichtung 12 verbunden sind. In dieser Rückspülleitung 6 ist ein steuerbarer Kugelhahn 2 angebracht sowie ein Sieb 13 zur Rückhaltung des Schlamms und ein Rückspülorgan 14.

Hat sich Kugelhahn 1 geöffnet, und ist die feuchte Schlammfracht in die Kammer 10 gelangt, so schließt Kugelhahn 1 wieder. Nachdem sich Kugelhahn 1 geschlossen hat, wird Kugelhahn 2 geöffnet und die Freispülung geschieht über das Freispülorgan 15. Die Freispülung erfolgt mittels Luft, die zu diesem Zweck eingebracht wird. Der Schlamm wird von einem Filter- bzw. Siebelement 13 zurückgehalten, die Retentardflüssigkeit fließt nach Passieren des Siebelements 13 durch die Rückspülleitung 6 in den Vorratsbehälter.

Nach Beendigung der Freispülung wird der Kugelhahn 2 geschlossen. Durch öffnen des Kugelhahns 3 kann mit Hilfe von Luft der trockene Schlamm mittels des Rückspülorgans 14, das aus Sicht der Rückspülrichtung vor dem Sieb 13 angebracht ist, rückgespült werden und so durch die Schlammaustragsleitung 8 zur Weiterverwertung gelangen. Am Ende des Rückspülvorgangs wird der Kugelhahn 3 wieder geschlossen.

Alternativ zur vorigen Ausführungsform ist Kugelhahn 1 so lange geöffnet, bis aus der Kammer 10 zur Schlammabscheidung über einen Sensor 11 ein Signal an Kugelhahn 1 kommt, das diesen veranlaßt, aufgrund des Erreichens der Grenzbeladung der Kammer 10 mit Schlamm, die Kammer 10 bis zur Beendigung des Schlammabscheidevorgangs zu schließen. Nachdem sich Kugelhahn 1 geschlossen hat, spielt sich der im vorigen Ausführungsbeispiel geschilderte Vorgang des Schlammabscheidens ab, unter Beibehaltung der vollen Filtrationsfähigkeit.

### Bezugszeichenliste

- 1: Kugelhahn
- 2: Kugelhahn
- 3: Kugelhahn
- 5: Filterraum
- 6: Rückspülleitung
- 7: Filter
- 8: Schlammaustragsleitung
- 9: Zulauf
- 10: Kammer zur Schlammabscheidung
- 11: Sensoren
- 12: Regeleinrichtung
- 13: Filter- bzw. Siebelement
- 14: Rückspülorgan
- 15: Freispülorgan

## Patentansprüche

1. Verfahren zum Filtrieren einer Flüssigkeit, bei dem während des Filtriervorganges in Zeitabständen das Filter abgereinigt wird und ein Verschlußorgan (1) an einer eigens dafür vorgesehenen Kammer (10) zur Schlammabscheidung geöffnet und/oder geschlossen wird, ohne den Filtriervorgang unterbrechen zu müssen.

2. Verfahren zum Filtrieren einer Flüssigkeit, insbesondere nach Anspruch 1, dadurch gekennzeichnet, daß während des Filtriervorgangs in Zeitabständen das Filter abgereinigt wird und ein Verschlußorgan (1) an einer eigens dafür vorgesehenen Kammer (10) vorzugsweise zur Schlammabscheidung geschlossen wird, ohne den Filtriervorgang zu unterbrechen.

3. Verfahren nach einem oder mehreren der vorgenannten Ansprüche, insbesondere zur Schlammabscheidung in einer Kammer 10, wobei insbesondere ein vorgeschalteter Filtrationsvorgang nicht unterbrochen werden muß und ein Verschlußorgan 1 geöffnet und/oder geschlossen wird.

4. Verfahren nach einem oder mehreren der vorgenannten Ansprüche, dadurch gekennzeichnet, daß nach Schließen des Verschlußorganes (1) ein Verschlußorgan (2) geöffnet wird, das die Freispülung ermöglicht.

5. Verfahren nach einem oder mehreren der vorgenannten Ansprüche, dadurch gekennzeichnet, daß nach Schließen des Verschlußorgans (2) Verschlußorgan (3) geöffnet wird, um den Schlamm mittels Rückspülung auszutragen.

6. Verfahren nach einem oder mehreren der vorgenannten Ansprüche, dadurch gekennzeichnet, daß die Freispülung und/oder Rückspülung mit Luft und/oder anderen zur Trocknung geeigneten Gasen durchgeführt wird.

7. Verfahren nach einem oder mehreren der vorgenannten Ansprüche, dadurch gekennzeichnet, daß nach Beendigung des Rückspülens Verschlußorgan (3) geschlossen wird.

8. Verfahren nach einem oder mehreren der vorgenannten Ansprüche, dadurch gekennzeichnet, daß mit Hilfe von Sensoren (11) und/oder einer Regeleinrichtung (12) ein kontinuierliches Filtrieren gewährleistet wird.

9. Vorrichtung zur Durchführung des Verfahrens nach einem oder mehreren der vorgenannten Ansprüche, dadurch gekennzeichnet, daß, aus Sicht des Filtergehäuses, die Kammer (10) zur Schlammabscheidung in Richtung der Schwerkraft angeordnet ist.

10. Vorrichtung zur Durchführung des Verfahrens nach einem oder mehreren der vorgenannten Ansprüche, dadurch gekennzeichnet, daß die Kammer (10) zur Schlammabscheidung mit einem Filter bzw. Siebelement (13) ausgestattet ist, um den Schlamm zurückzuhalten.

11. Vorrichtung zur Durchführung des Verfahrens nach einem oder mehreren der vorgenannten Ansprüche, dadurch gekennzeichnet, daß die Verschlußorgane (1, 2, 3) Kugelhähne sind.

12. Vorrichtung zur Durchführung des Verfahrens nach einem oder mehreren der vorgenannnten Ansprüche, dadurch gekennzeichnet, daß die Verschlußorgane (1, 2, 3) mit elektrischem und/oder pneumatischem und/oder hydraulischem und/oder mit Eigenmedienantrieb ausgestattet sind.

13. Vorrichtung zur Durchführung des Verfahrens nach einem oder mehreren der vorgenannten Ansprüche, dadurch gekennzeichnet, daß die Sensoren Füllstands- und/oder Schmutzgradanzeiger sind.

14. Vorrichtung zur Durchführung des Verfahrens nach einem oder mehreren der vorgenannten Ansprüche, dadurch gekennzeichnet, daß ein Rückspülorgan (14) an der Kammer (10) zur Schlammabscheidung und/oder zwischen Verschlußorgan (2) und Filter bzw. Siebelement (13) angeordnet ist.

15. Vorrichtung zur Durchführung des Verfahrens nach einem oder mehreren der vorgenannten Ansprüche, dadurch gekennzeichnet, daß ein Freispülorgan (15) an der Kammer (10) zur Schlammabscheidung angeordnet ist.
